# EUROPEAN PATENT SPECIFICATION

(11) **EP 0 362 234 B1**
(45) Date of publication and mention of the grant of the patent: **04.08.1993**
(21) Application number: 88904216.4
(22) Date of filing: 09.05.1988
(51) Int. Cl.: G03B 42/04, G03B 42/02

(54) **DEVICE FOR CENTERING X-RAY FILM CASSETTES**
VORRICHTUNG ZUR ZENTRIERUNG VON RÖNTGENFILMKASSETTEN
DISPOSITIF POUR CENTRER DES CASSETTES DE FILMS POUR RAYONS X

(30) Priority: 11.05.1987 DE 3715665
(43) Date of publication of application: 11.04.1990
(73) Proprietor: EASTMAN KODAK COMPANY (a New Jersey corporation), Rochester, New York 14650 (US); KODAK AKTIENGESELLSCHAFT, D-70323 Stuttgart (DE)
(72) Inventor: MIRLIEB, Bernd, D-7012 Fellbach (DE); KILLGUSS, Heinrich, D-7014 Kornwestheim (DE)
(74) Representative: Lewandowsky, Klaus, Dipl.-Ing.
(86) International application number: PCT/EP88/00404
(87) International publication number: WO 88/09003

(56) References cited:
- DE-A- 3 000 760
- US-A- 2 097 402
- US-A- 3 150 263
- US-A- 4 538 293

## Description

The invention relates to a device for centering X-ray film cassettes of different sizes, comprising two parallely guided bars movable by a symmetrical lever arrangement towards and away from each other, respectively, and being arranged in a cassette loading and unloading apparatus.

From US-PS 45 38 293, a cassette holder with a centering device for X-ray film cassettes is known which consists of two symmetrical lever arrangements which are arranged one above the other, intersect and, at the point of intersection, are pivotable about a common, stationary pivot pin. Via each of the two lever arrangements, two parallely guided clamping members are movable towards each other when the cassette holder is inserted into an X-ray machine, and away from each other when the cassette holder is removed from the X-ray machine.

An actuator machanism is positioned between the two intersecting lever arrangements and is also pivotable about the pivot pin. In the area where it is hinged to said pin, the actuator mechanism is in operative connection with the one lever arrangement via a coupling device, and with the other lever arrangement via a follower pin. The free end of the actuator mechanism opposite to that area is hinged to a latch shiftable at she side of the cassette holder and cooperating with an abutment of the X-ray machine when the cassette holder is inserted or removed.

This centering device is disadvantageous in that it consists of a great number of parts all of which have to be moved when the cassette holder is manually handled, i.e when it is inserted into or removed from the X-ray machine. Great physical strength has to be exerted especially for removing the cassette holder because for releasing the X-ray film cassette the lever arrangements have to be moved away from each other in opposition to the force of a spring.

Another centering device is known from US-PS 3 150 263. That centering device is associated with a feeding means located in a cassette unloading and loading machine for transporting an X-ray film cassette into an unloading and loading position. The known centering device comprises a first pneumatically reciprocating crank disk and a second crank disk operatively connected with that first dish and rotatable in the opposite direction. Each crank disk is associated with a bar via a pair of parallely pivotable links.

According to another cassette positioning device (DE-OS 30 00 760), the shifting movement of a bar is effected by means of a motor-driven worm gear spindle.

Both centering devices, the one which can be operated pneumatically and the one which can be driven by a motor, are disadvantageous in that the centering and alignment of an X-ray film cassette is effected by an abrupt and unabsorbed impact of the bars on the side walls of the cassette, and in that in the case of the motor drive of the last-mentioned device, an overtravel of the motor cannot be compensated. Moreover, in the case of the pneumatically operable device, X-ray film cassettes of larger sizes can be precisely and reliably aligned and centered only by means of an additional slider which engages the rear end of the cassette and transports the X-ray film cassette over the last portion of its path up to its unloading and loading position.

It is the object of the invention to provide a motor-controlled centering device which has a simple construction, operates reliably and precisely and where the impact of the bars on the side walls of the cassette is attenuated, the motor drive moving the bars is switched off at a given point and the overtravel of the motor is compensated.

In accordance with the invention, this object is attained in that the symmetrical lever arrangement moving the bars is actuated by means of a rod which is hinged to it, is shiftable by a motor and consists of two portions movable towards each other, and in that a switch for stopping the motor is arranged in the path of movement of at least one of said portions.

An embodiment of the invention is illustrated in the drawings and will be described in further detail below.

In the drawings
- Figs. 1 and 2: show a plan view of the subject matter of the invention in two functional positions,
- Fig. 3: shows a detail of the subject matter according to Fig. 2 in a sectional view along line II-II,
- Figs. 4 and 5: show plan views of a detail of the subject matter according to Figs. 1 and 2 in two functional positions, and
- Fig. 6: show a sectional view along line IV-IV of a detail of the subject matter according to Fig. 4.

In an apparatus 1 for unloading exposed film sheets from X-ray film cassettes of different sizes and for loading said cassette with unexposed film sheets, a device for centering the X-ray film cassette is provided in the area of the unloading and loading station. This centering device comprises two parallely guided bars 10 and 12 movable towards each other and away from each other respectively, by means of a symmetrical lever arrangement 6, 7, 8 in combination with a driven rod 4, 5. A transport belt 15 transports an X-ray film cassette 19 from an input point to the unloading and loading station. The transport belt 15 is placed around two spindles 14, one of which is driven. In the present embodiment, the X-ray film cassette 19 illustrated is of small size.

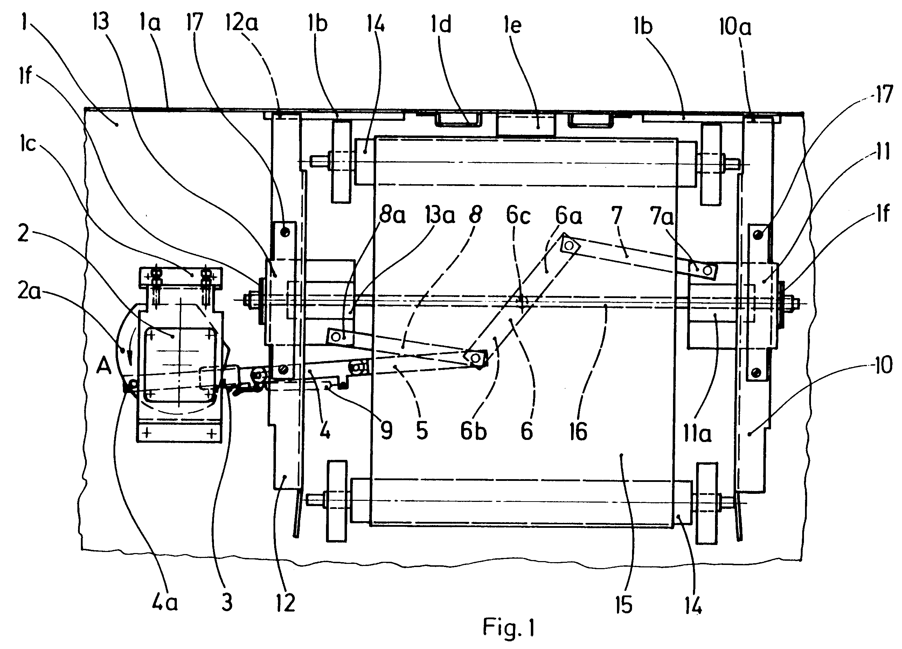

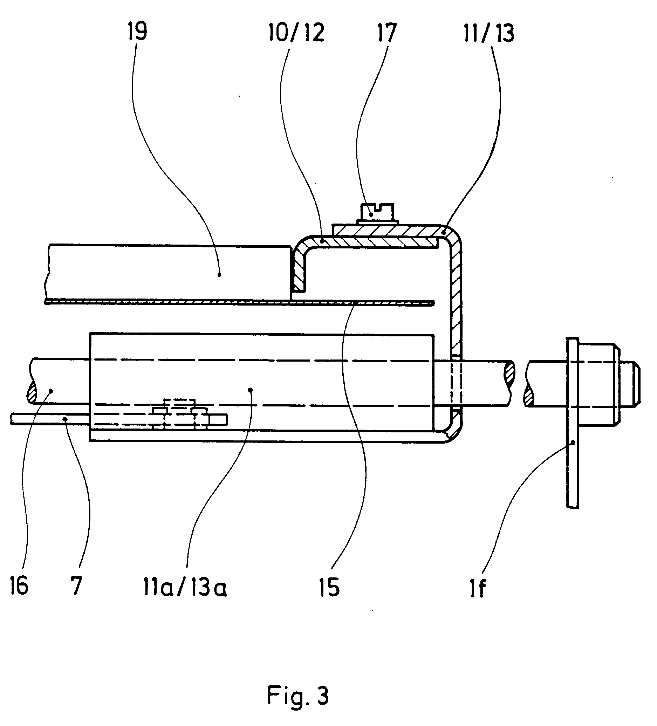

As can be seen from Figs. 1 to 3, the bars 10 and 12 are mounted to angle plates 11 and 13 by means of screws 17. Each angle plate 11 and 13 respectively is shiftably mounted by means of a guide sleeve 11a and 13a respectively on a guide shaft 16 secured between two mounting angles 1f of the apparatus. The ends of the bars 10, 12 which extend into the interior of the apparatus are provided with guide grooves 10a and 12a. By means of said guide grooves, the bars 10 and 12 are additionally guided for sliding movement on guide rails 1b arranged in an intermediate wall 1a of the apparatus. The numeral 1e denotes a guide ramp for the cassettes, which is located on the intermediate wall 1a, and the numeral 1d two cassette abutments fastened to said intermediate wall.

A symmetrical lever arrangement located between the two bars 10 and 12 serves to actuate said bars. The lever arrangement consists of a two-arm lever 6 mounted centrally about a stationary pin 6c. At one free lever end 6a, a first lever arm 7 is hingedly connected which points to the right and at the other free lever end 6b a second lever arm 8 is hingedly connected which points to the left. The free ends 7a and 8a of the two lever arms 7 and 8 are hingedly connected to the angle plates 11 and 13 supporting the bars 10 and 12.

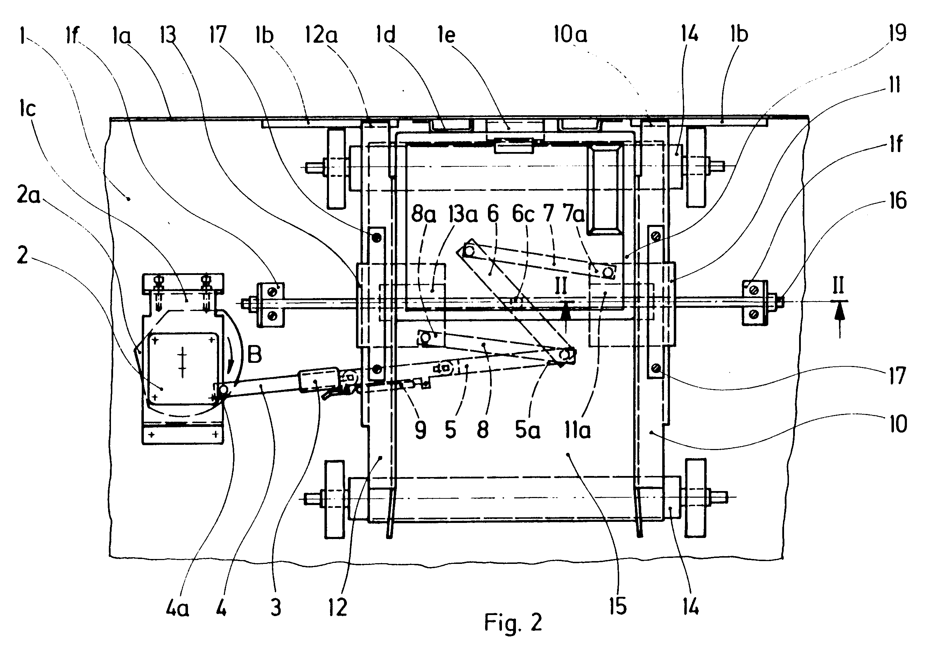

A drive motor 2 is screwed to a mounting angle 1c of the apparatus. The free end 4a of a portion 4 of a rod consisting of two portions 4 and 5 movable towards each other is linked to a crank disk 2a seated on the motor shaft and rotatable by the motor in the two directions of the arrows "A" and "B" (Figs. 1 and 2). The other free end 5a of portion 5 of the rod directly engages the hinge between lever 6 and the lever arm 8 which points to the left.

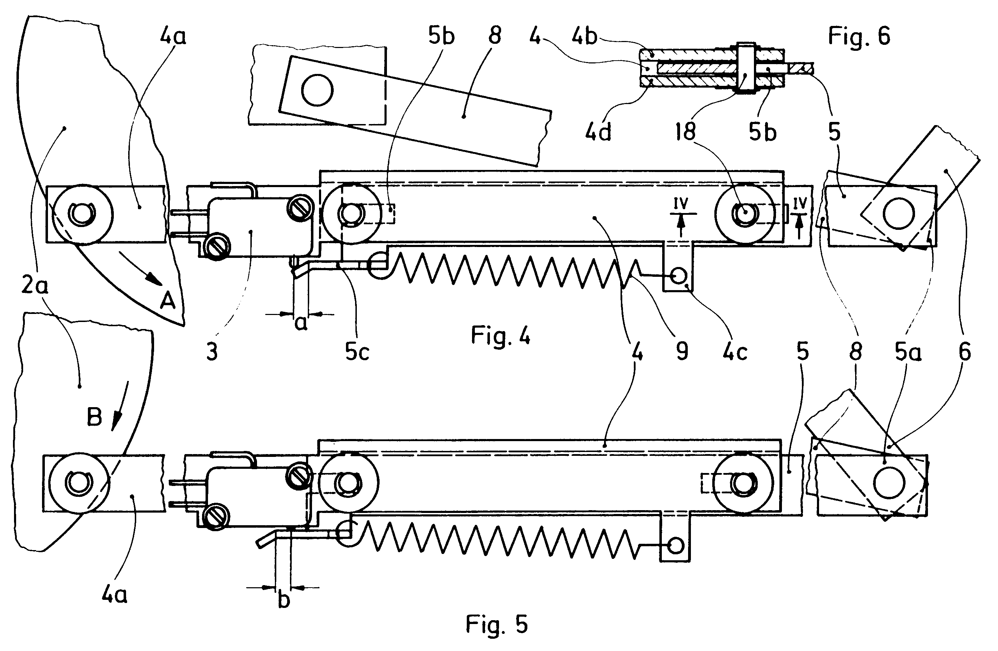

As can be inferred in particular from Figs. 2 and 4, the two portions 4 and 5 of the rod are connected so as to be linearly shiftable. According to the embodiment, a switch 3 is arranged in the middle of portion 4. The half of portion 4 to the right of switch 3 is U-shaped and serves to accommodate the left half of portion 5 which is provided with two-pin-and-slot guide arrangements 5b. As shown in Fig. 6, pins 18 are inserted or screwed into the lower part 4d of the U-shaped half of portion 4, said pins extending through the pin-and-slot guide arrangements 5b of portion 5 and through bores in the upper portion 4b of the U-shaped half of portion 4.

A spring 9 is hooked with one end to a tongue 4c of portion 4 and with its other end to a bent-off portion 5c of portion 5. It forms a friction clutch holding the two portions 4 and 5 apart in opposite directions. In this initial position (Figs. 1 and 4) one part of the bent-off portion 5c rests loosely on the button of switch 3.

When an X-ray film cassette 19 is transported from the input point to the unloading and loading station, motor 2 is switched on by switch means not illustrated in detail when the front side of the cassette contacts one of the abutments 1d, the motor actuating the symmetrical lever arrangement 6, 7 and 8 by means of crank disk 2a rotating in the direction "A" as well as the rod hinged to it. The bars 10, 12 are thereby moved from the initial position shown in Fig. 1 towards each other. When the bars 10, 12 abut on the side walls of the cassette, the portions 4 and 5 of the rod are shifted together. The path of shifting movement is restricted to a length such that switch 3 is actuated and motor 2 switched off in a first path section "a" and the overtravel of the motor compensated in a second path section "b". At the same time, this slight shifting together of the two portions 4 and 5 of the rod absorbs the impact of the bars 10 and 12 abutting on the side walls of the cassette.

## Claims

1. Device for centering X-ray film cassettes of different sizes, comprising two parallely guided bars (10, 12) movable towards and away from each other respectively by a symmetrical lever arrangement (6, 7, 8) and being arranged in a cassette unloading and loading apparatus, **characterized** in that said arrangement is actuated via a motor (2) by means of a slidable rod hinged to the arrangement, said rod consisting of two portions (4, 5) movable towards each other, and in that a switch (3) for arresting the motor (2) is arranged in the path of movement of at least one of the portions (4, 5).

2. Device according to claim 1, characterized in that a friction clutch formed by a spring (9) is connected with both portions (4, 5) such that they are urged apart in opposite directions.

3. Device according to claims 1 and 2, characterized in that the two portions (4, 5) are held together such that they are linearly shiftable, in that when the bars (10, 12) abut on an X-ray film cassette (19) , the portions (4, 5) are shifted together in opposition to the force of spring (9) and in that the path of shifting movement is dimensioned such that switch (3) is actuated in a first section "a" of the path and an overtravel of the motor is compensated in a second section "b" of the path.

4. Device according to claim 1, characterized in that the length of the bars (10, 12) corresponds at least to the length of the sides of an X-ray film cassette of maximum size, in that the bars (10, 12) are shiftably guided on a guide rod (16) and, with their free ends extending into the interior of the apparatus and provided with guide grooves (10a, 12a), are also shiftably guided on guide rails (1b).

## Patentansprüche

1. Vorrichtung zur Zentrierung von Röntgenfilmkassetten unterschiedlichen Formats, die aus zwei parallel geführten, durch eine symmetrische Hebelanordnung (6, 7, 8) aufeinander zu bzw. voneinander weg bewegbaren Leisten (10, 12) besteht und in einem Kassettenentlade- und -beladegerät angeordnet ist, **dadurch gekennzeichnet**, daß die Hebelanordnung über einen Motor (2) mittels einer an ihr angelenkten, verschiebbaren und aus zwei gegeneinander bewegbaren Teilen (4, 5) bestehenden Stange betätigt wird, und daß im Bewegungsweg mindestens eines der Teile (4, 5) ein Schalter (3) zum Stillsetzen des Motors (2) angeordnet ist.

2. Vorrichtung nach Anspruch 1, dadurch gekennzeichnet, daß eine von einer Feder (9) gebildete kraftschlüssige Kupplung derart mit beiden Teilen (4, 5) verbunden ist, daß diese in einander entgegengesetzten Richtungen auseinandergehalten wird.

3. Vorrichtung nach den Ansprüchen 1 und 2 , dadurch gekennzeichnet, daß die beiden Teile (4, 5) geradlinig verschiebbar aneinander gehaltert sind, daß beim Anschlag der Leisten (10, 12) an einer Röntgenfilmkassette (19) die Teile (4, 5) entgegen der Kraft der Feder (9) zusammengeschoben sind, und daß der Verschiebeweg so lang bemessen ist, daß in einem ersten Wegabschnitt "a" der Schalter (3) betätigt und in einem zweiten Wegabschnitt "b" ein Motorüberlauf ausgeglichen wird.

4. Vorrichtung nach Anspruch 1, dadurch gekennzeichnet, daß die Länge der Leisten (10, 12) mindestens der Seitenlänge einer Röntgenfilmkassette größten Formats entspricht, daß die Leisten (10, 12) auf einer Führungsstange (16) und mittels ihrer ins Geräteinnere ragenden, mit Führungsnuten (10a, 12a) versehenen freien Enden auf Führungsschienen (1b) verschiebbar geführt sind.

## Revendications

1. Dispositif de centrage de cassettes pour film sensible aux rayons-X, de dimensions différentes comprenant deux barres de guidages parallèles (10, 12) mobiles de manière à se rapprocher ou à s'éloigner l'une de l'autre par l'intermédiaire d'un agencement (6, 7, 8) symétrique de leviers et étant agencé dans un appareil de chargement et de déchargement de cassettes, dispositif caractérisé en ce que ledit agencement est mis en oeuvre, via un moteur (2), au moyen de deux tiges coulissantes articulées audit agencement consistant en deux parties (4, 5) mobile l'une vers l'autre, et en ce qu'on dispose un interrupteur (3) sur la trajectoire de déplacement d'au moins une desdites parties (4, 5) en vue d'arréter le moteur (2).

2. Dispositif selon la revendication 1, caractérisé en ce qu'un embrayage à friction formé par un ressort (9) est relié entre les deux parties (4, 5) de manière que ces parties soient sollicitées dans des directions opposées.

3. Dispositif selon la revendication 1 ou 2, caractérisé en ce que les deux parties (4, 5) sont maintenues ensemble de manière à pouvoir être décalées linéairement, en ce que, lorsque les barres (10, 12) appuient sur une cassette (19) pour film sensible aux rayons-X, les parties (4, 5) sont décalées ensemble à l'encontre de la force exercée par le ressort (9) et en ce que la dimension du déplacement est telle que l'interrupteur (3) est mis en oeuvre pendant une première partie "a" du déplacement et le déplacement dû à l'inertie du moteur est compensé par une seconde partie "b" du déplacement.

4. Dispositif selon la revendication 1, caractérisé en ce que la longueur des barres (10, 12) correspond au moins à la longueur des côtés d'une cassette pour film sensible aux rayons-X de dimension maximale, en ce que les barres (10, 12) sont décalables en étant guidées sur une tige de guidage (16) et sur un rail de guidage (16), les extrémités libres s'étendent vers l'intérieur de l'appareil et les barres sont pourvues de gorges de guidages (10a, 12a).
